(19) Europäisches Patentamt
European Patent Office
Office européen des brevets

(11) EP 3 543 268 A1

(12) # EUROPÄISCHE PATENTANMELDUNG

(43) Veröffentlichungstag:
**25.09.2019 Patentblatt 2019/39**

(21) Anmeldenummer: **18163430.4**

(22) Anmeldetag: **22.03.2018**

(51) Int Cl.:
***C08G 18/48*** *(2006.01)*
***C08G 18/76*** *(2006.01)*
***C08G 18/16*** *(2006.01)*
***C08G 18/18*** *(2006.01)*
***C08G 18/20*** *(2006.01)*
***C08G 18/24*** *(2006.01)*
***C08G 18/40*** *(2006.01)*
***C08G 18/44*** *(2006.01)*
*C08G 101/00* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON POLYURETHANWEICHSCHAUMSTOFFEN**

(57) Der Gegenstand der vorliegenden Erfindung betrifft ein Verfahren zur Herstellung von Polyurethanweichschaumstoffen, insbesondere von offenzelligen Polyurethanweichschaumstoffen auf Polyethercarbonatpolyol- und Toluylendiisocyanatbasis, wobei die resultierenden Polyurethanschaumstoffe ähnliche Eigenschaften wie die bereits bekannten Polyurethanweichschaumstoffe aufweisen, diese jedoch in ihrer Herstellung einfacher und nachhaltiger sind.

EP 3 543 268 A1

## Beschreibung

Der Gegenstand der vorliegenden Erfindung betrifft ein Verfahren zur Herstellung von Polyurethanweichschaumstoffen, insbesondere von offenzelligen Polyurethanweichschaumstoffen auf Polyethercarbonatpolyol- und Toluylendiisocyanatbasis, wobei die resultierenden Polyurethanschaumstoffe ähnliche Eigenschaften wie die bereits bekannten Polyurethanweichschaumstoffe aufweisen, diese jedoch in ihrer Herstellung einfacher und nachhaltiger sind.

Um Weichschaumstoffe auf Polyethercarbonatpolyol- und Toluylendiisocyanatbasis mit einer gewünschten Offenzelligkeit zu erhalten wurden bisher zwei unterschiedliche Chargen von Toluylengemischen eingesetzt. Die erste Charge ist eine durch eine einfache Herstellung, nämlich einer Nitrierung und dann Reduktion zum Amin und Phosgenierung, erhältliche Mischung aus 80 Gew.-% 2,4-Toluylendiisocyanat und 20 Gew.-% 2,6-Toluylendiisocyanat. Die zweite Mischung besteht aus 67 Gew.-% 2,4-Toluylendiisocyanat und 33 Gew.-% 2,6-Toluylendiisocyanat und muss um den höheren Gehalt an 2,6-Toluylendiisocyanat zu erhalten kosten- und arbeitsintensiv aufgearbeitet werden. Dabei wird 2,4-Toluendiisocyanat aus der Mischung auskristallisiert, um den Anteil an 2,6-Toluylendiisocyanat zu erhöhen. Der höhere Gehalt an 2,6-Toluylendiisocyanat ist nötig, um den Gehalt an dieser Verbindung in der Umsetzung für die Polyurethanweichschaumstoffe zu erhöhen. Der höhere Gehalt an 2,6-Toluylendiisocyanat ist wiederum nötig, um die gewünschte Offenzelligkeit zu erhalten.

Aufgabe der vorliegenden Erfindung war es deshalb ein System zu finden, in dem der Einsatz der mittels Auskristallisation aufgearbeiteten Charge des Toluylendiisocyanatgemischs verringert oder komplett vermieden werden kann.

Die Erfinder der vorliegenden Erfindung haben dabei überraschend gefunden, dass dies durch den Einsatz spezifischer Carbonsäureester der vorliegenden Erfindung möglich ist.

Zwar beschreibt die WO 2017097729 A1 bereits den generellen Einsatz von Estern- ein oder mehrbasiger Carbonsäuren für Polyurethanschaumstoffe auf Basis von Polyethercarbonatpolyolen, jedoch sind die spezifischen Carbonsäureester der vorliegenden Erfindung nicht offenbart. Ferner ist für den Fachmann aus dieser Druckschrift nicht zu erkennen, dass der Einsatz von Estern- ein oder mehrbasiger Carbonsäuren dazu genutzt werden kann die durch Auskristallisieren aufgearbeitete Charge des Toluyiendiisocyanats zu verringern oder komplett zu vermeiden. Diese Druckschrift lehrt lediglich, dass durch den Einsatz von Estern- ein oder mehrbasiger Carbonsäuren Schaumstoffe mit einer reduzierten Emission von cyclischem Propylencarbonat erhalten werden können

Die Aufgabe der vorliegenden Erfindung wird gelöst durch ein Verfahren zur Herstellung von Polyurethanschaumstoffen durch Umsetzung von

Komponente A) enthaltend Polyethercarbonatpolyol A1 sowie gegebenenfalls eines oder mehrerer Polyetherpolyole, wobei die Polyetherpolyole A2 frei von Carbonateinheiten sind,
B) gegebenenfalls

B1) Katalysatoren, und/oder
B2) Hilfs- und Zusatzstoffen

C) Wasser und/oder physikalischen Treibmitteln,
mit
D) Di-und/oder Polyisocyanaten,
wobei die Herstellung bei einer Kennzahl von 90 bis 125 erfolgt,
dadurch gekennzeichnet, dass die Herstellung in Gegenwart mindestens einer Verbindung E erfolgt, die folgende Formel (I) aufweist:

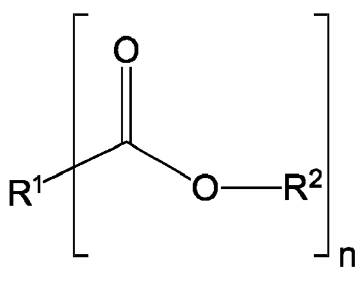

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2 beziehungsweise im Falle von verzweigt mindestens 3 Kohlenstoffatomen ist;
$R^2$ ein linearer, verzweigter, substituierter oder unsubstituierter aliphatischer Kohlenwasserstoffrest ist; und n gleich 1 bis 3 ist.

Ist in der vorliegenden Erfindung angegeben, dass eine bestimmte Verbindung oder Rest substituiert sein kann, so werden dabei dem Fachmann bekannte Substituenten verwendet. Insbesondere bevorzugt ist dabei, dass in den Verbindungen ein oder mehrere Wasserstoffatome durch -F, -Cl, -Br, -I, -OH, =O, $-OR^3$, $-OC(=O)R^3$, $-C(=O)-R^3$, $-NH_2$, $-NHR^3$, $-NR^3_2$ ersetzt sind, wobei $R^3$ einen linearen Alkylrest mit 1 bis 10 Kohlenstoffatomen oder einen verzweigten Alkylrest mit 3 bis 10 Kohlenstoffatomen darstellt. Besonders bevorzugt sind die Substituenten -F, -Cl, $-OR^3$, $-OC(=O)R^3$, und $-C(=O)-R^3$, wobei $R^3$ einen linearen Alkylrest mit 1 bis 10 Kohlenstoffatomen oder einen verzweigten Alkylrest mit 3 bis 10 Kohlenstoffatomen darstellt.

Insbesondere betrifft die vorliegende Erfindung:

1. Verfahren zur Herstellung von Polyurethanschaumstoffen durch Umsetzung von

Komponente A) enthaltend Polyethercarbonatpolyol A1, insbesondere mit einer Hydroxylzahl gemäß DIN 53240-1:2013-06 von 20 mg KOH/g bis 120 mg KOH/g (Komponente A1) sowie gegebenenfalls eines oder mehrerer Polyetherpolyole, insbesondere mit einer Hydroxylzahl gemäß DIN 53240-1:2013-06 von 20 mg KOH/g bis 250 mg KOH/g und einem Gehalt an Ethylenoxid von 0 bis 60 Gew.-% (Komponente A2), wobei die Polyetherpolyole A2 frei von Carbonateinheiten sind,
B) gegebenenfalls

B1) Katalysatoren, und/oder
B2) Hilfs- und Zusatzstoffen

C) Wasser und/oder physikalischen Treibmitteln,
mit
D) Di-und/oder Polyisocyanaten, welche 2,4-Toluylendiisocyanat und 2,6-Toluylendiisocyanat enthalten oder daraus bestehen;
wobei die Herstellung bei einer Kennzahl von 90 bis 125 erfolgt,
dadurch gekennzeichnet, dass die Herstellung in Gegenwart mindestens einer Verbindung E erfolgt, die folgende Formel (I) aufweist:

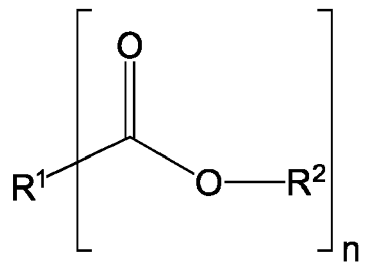

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2, im Falle von verzweigt mindestens 3, Kohlenstoffatomen ist;
$R^2$ ein linearer, verzweigter, substituierter oder unsubstituierter aliphatischer Kohlenwasserstoffrest ist; und n gleich 1 bis 3 ist.

2. Verfahren gemäß Aspekt 1, dadurch gekennzeichnet, dass in Formel (I)
$R^1$ ein aromatischer Kohlenwasserstoffrest mit mindestens 6 Kohlenstoffatomen ist oder ein linearer, verzweigter, substituierter oder unsubstituierter aliphatischer Kohlenwasserstoffrest mit mindestens 3, bevorzugt 3 bis 10, Kohlenstoffatomen ist;
$R^2$ ein linearer, verzweigter, substituierter oder unsubstituierter aliphatischer Kohlenwasserstoffrest mit mindestens 3, bevorzugt 3 bis 16, Kohlenstoffatomen ist; und n gleich 1 bis 3 ist;

bevorzugt ist $R^1$ ein aromatischer Kohlenwasserstoffrest mit 6 Kohlenstoffatomen oder ein linearer, verzweigter, substituierter oder unsubstituierter aliphatischer gesättigter Kohlenwasserstoffrest mit mindestens 3, bevorzugt 3 bis 10, Kohlenstoffatomen; stärker bevorzugt ist die Verbindung ein Ester einer gegebenenfalls substituierten $C_{3-12}$ Monocarbonsäure die mit einem linearen oder verzweigten $C_{3-16}$ Alkylalkohol verestert wurde, insbesondere Hexylhexanoat;
oder ein Ester einer gegebenenfalls substituierten $C_{4-12}$, stärker bevorzugt $C_{6-10}$, Dicarbonsäure die mit einem linearen oder verzweigten $C_{3-16}$ Alkylalkohol verestert wurde, insbesondere ausgewählt aus Bis(2-ethylhexyl)adipat und Diisodecylsebacat; oder ein Ester einer gegebenenfalls substituierten $C_{5-16}$, stärker bevorzugt $C_{6-10}$; Tricarbonsäure, die mit einem linearen oder verzweigten $C_{3-16}$ Alkylalkohol verestert wurde, insbesondere ausgewählt aus Tris(2-ethylhexyl) O-acetylcitrat, und Tributyl O-acetylcitrat;
oder ein Ester eines mono-, di-, oder tri- substituierten Benzols mit einer Carbonsäuregruppe, das mit einem linearen oder verzweigten $C_{3-16}$ Alkylalkohol verestert wurde, insbesondere Ester von $C_{6-16}$ Alkylalkoholen und Trimesinsäure oder Trimellitsäure, besonders bevorzugt Tris(2-ethylhexyl)trimellitat.

3. Verfahren gemäß Aspekt 1 oder 2, dadurch gekennzeichnet, dass die Komponente A die folgende Zusammensetzung aufweist:

A1 40 bis 100 Gew. -Teile eines oder mehrerer Polyethercarbonatpolyole mit einer Hydroxylzahl gemäß DIN 53240-1:2013-06 von 20 mg KOH/g bis 120 mg KOH/g,
A2 0 bis 60 Gew.-Teile eines oder mehrerer Polyetherpolyole mit einer Hydroxylzahl gemäß DIN 53240-1:2013-06 von 20 mg KOH/g bis 250 mg KOH/g und einem Gehalt an Ethylenoxid von 0,10 bis 59,0 Gew.-%, bevorzugt 1 bis 30 Gew.-%, stärker bevorzugt 5 bis 15 Gew.-% und/oder einem Gehalt an Propylenoxid von 40 bis 99,9 Gew.-%, bevorzugt 70 bis 99 Gew.-%, stärker bevorzugt 85 bis 95 Gew-.%, wobei die Polyetherpolyole A2 frei von Carbonateinheiten sind,
A3 0 bis 20 Gew.-Teile, bevorzugt 0,1 bis 10 Gew.-Teile, bezogen auf die Summe der Gew.-Teile der Komponenten A1 und A2, eines oder mehrerer Polyetherpolyole mit einer Hydroxylzahl gemäß DIN 53240-1:2013-06 von 20 mg KOH/g bis 250 mg KOH/g, und einem Gehalt an Ethylenoxid von mindestens 60 Gew.-%, wobei die Polyetherpolyole A3 frei von Carbonateinheiten sind,
A4 0 bis 40 Gew.-Teile, bevorzugt 0,1 bis 30 Gew.-Teile, bezogen auf die Summe der Gew.-Teile der Komponenten A1 und A2, eines oder mehrerer Polymerpolyole, PHD-Polyole und/oder PIPA-Polyole,
A5 0 bis 40 Gew.-Teile, bevorzugt 0,1 bis 25 Gew.-Teile, bezogen auf die Summe der Gew.-Teile der Komponenten A1 und A2, Polyole, die nicht unter die Definition der Komponenten A1 bis A4 fallen, wobei alle Gewichtsteilangaben der Komponenten A1, A2, A3, A4, A5 so normiert sind, dass die Summe der Gewichtsteile A1 + A2 in der Zusammensetzung 100 ergibt.

4. Verfahren gemäß einem der vorstehenden Aspekte, dadurch gekennzeichnet, dass die mindestens eine Verbindung E in einer Menge von 1,0 bis 15,0, bevorzugt 2,5 bis 10,0, stärker bevorzugt 5 bis 8, Gew.-Teile eingesetzt wird, wobei sich alle Gewichtsteilangaben der Verbindung E auf die Summe der Gewichtsteile der Komponenten A1 + A2 = 100 Gewichtsteile beziehen.

5. Verfahren gemäß einem der vorstehenden Aspekte, dadurch gekennzeichnet, dass als Komponente B

B1 Katalysatoren wie

a) aliphatische tertiäre Amine, cycloaliphatische tertiäre Amine, aliphatische Aminoether, cycloaliphatische Aminoether, aliphatische Amidine, cycloaliphatische Amidine, Harnstoff und Derivate des Harnstoffs und/oder
b) Zinn(II)-Salze von Carbonsäuren, und

B2 gegebenenfalls Hilfs- und Zusatzstoffe eingesetzt werden.

6. Verfahren gemäß einem der vorstehenden Aspekte, dadurch gekennzeichnet, dass Komponente A umfasst:

A1 65 bis 75 Gew.-Teile eines oder mehrerer Polyethercarbonatpolyole mit einer Hydroxylzahl gemäß DIN 53240-1:2013-06 von 20 mg KOH/g bis 120 mg KOH/g, und
A2 35 bis 25 Gew.-Teile eines oder mehrerer Polyetherpolyole mit einer Hydroxylzahl gemäß DIN 53240 von 20 mg KOH/g bis 250 mg KOH/g und einem Gehalt an Ethylenoxid von 0,10 bis 59,0 Gew.-%, bevorzugt 1 bis 30 Gew.-%, stärker bevorzugt 5 bis 15 Gew.-% und/oder einem Gehalt an Propylenoxid von 40 bis 99,9 Gew.-

%, bevorzugt 70 bis 99 Gew.-%, stärker bevorzugt 85 bis 95 Gew-.%, wobei die Polyetherpolyole A2 frei von Carbonateinheiten sind.

7. Verfahren gemäß einem der vorstehenden Aspekte, dadurch gekennzeichnet, dass Komponente A1 ein Polyethercarbonatpolyol umfasst, welches erhältlich ist durch Copolymerisation von Kohlendioxid, einem oder mehreren Alkylenoxiden, in Gegenwart eines oder mehrerer H-funktioneller Startermoleküle, wobei das Polyethercarbonatpolyol vorzugsweise einen $CO_2$-Gehalt von 15 bis 25 Gew.-% aufweist.

8. Verfahren gemäß einem der vorstehenden Aspekte, dadurch gekennzeichnet, dass Komponente D mindestens 50 Gew.-%, bevorzugt mindestens 80 Gew.-% 2,4-Toluylendiisocyanat und 2,6-Toluylendiisocyanat umfasst.

9. Verfahren gemäß einem der vorstehenden Aspekte, dadurch gekennzeichnet, dass in der Komponente D höchstens 21,5 Gew.-% an 2,6-Toluylendiisocyanat enthalten sind, basierend auf dem Gesamtgewicht der Komponente D, bevorzugt wobei 18,5 bis 21,5 Gew.-% an 2,6-Toluylendiisocyanat enthalten sind, basierend auf dem Gesamtgewicht der Komponente D, stärker bevorzugt wobei 20,0 bis 21,5 Gew.-% an 2,6-Toluylendiisocyanat enthalten sind, basierend auf dem Gesamtgewicht der Komponente D, am stärksten bevorzugt wobei 20,0 Gew.-% an 2,6-Toluylendiisocyanat enthalten sind, basierend auf dem Gesamtgewicht der Komponente D.

10. Verfahren gemäß Aspekt 9, dadurch gekennzeichnet, dass 2,4-Toluylendiisocyanat und 2,6-Toluylendiisocyanat als eine Mischung mindestens einer Charge, bevorzugt zwei voneinander verschiedenen Chargen, eingesetzt werden wobei die erste Charge 2,4-Toluylendiisocyanat zu 2,6-Toluylendiisocyanat im Verhältnis von 80 Gew.-% zu 20 Gew.-% enthält und die zweite Charge 2,4-Toluylendiisocyanat zu 2,6-Toluylendiisocyanat im Verhältnis von 67 Gew.-% zu 33 Gew.-% enthält, wobei der Anteil an der zweiten Charge höchstens 25 Gew.-%, bevorzugt höchstens 10 Gew.-%, bezogen auf das Gesamtgewicht der ersten und der zweiten Charge beträgt, stärker bevorzugt wobei lediglich die beiden Chargen als Komponente D eingesetzt werden.

11. Polyurethanschaumstoffe, erhältlich durch ein Verfahren gemäß einem der Aspekte 1 bis 10.

12. Polyurethanschaumstoffe gemäß Aspekt 11, dadurch gekennzeichnet, dass es sich um Polyurethan- Weichschaumstoffe handelt, insbesondere um offenzellige PolyurethanWeichschaumstoffe.

13. Polyurethanschaumstoffe gemäß Aspekt 11 oder 12, dadurch gekennzeichnet, dass die Polyurethanschaumstoffe ein Raumgewicht gemäß DIN EN ISO 3386-1:2015-10 von 45,5 bis 60,0 kg/$m^3$, bevorzugt 46,0 bis 58,0 kg/$m^3$, aufweisen.

14. Verwendung der Polyurethanschaumstoffe gemäß einem der Aspekte 11 bis 13 zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

15. Zweikomponentensystem zur Herstellung von Polyurethanschaumstoffen enthaltend eine erste Komponente K1 umfassend oder bestehend aus:

Komponente A) enthaltend Polyethercarbonatpolyol, insbesondere mit einer Hydroxylzahl gemäß DIN 53240-1:2013-06 von 20 mg KOH/g bis 120 mg KOH/g (Komponente A1) sowie gegebenenfalls eines oder mehrerer Polyetherpolyole, insbesondere mit einer Hydroxylzahl gemäß DIN 53240-1:2013-06 von 20 mg KOH/g bis 250 mg KOH/g und einem Gehalt an Ethylenoxid von 0 bis 60 Gew.-% (Komponente A2), wobei die Polyetherpolyole A2 frei von Carbonateinheiten sind,
B) gegebenenfalls

B1) Katalysatoren, und/oder
B2) Hilfs- und Zusatzstoffen

C) Wasser und/oder physikalischen Treibmitteln, und
E) eine Verbindung, die folgende Formel (I) aufweist:

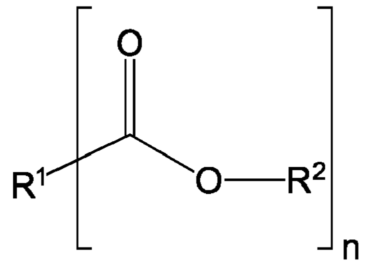

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2 Kohlenstoffatomen ist;
$R^2$ ein linearer, verzweigter, substituierter oder unsubstituierter aliphatischer Kohlenwasserstoffrest ist; und n gleich 1 bis 3 ist

und eine zweite Komponente K2 umfassend oder bestehend aus:

D) Di-und/oder Polyisocyanaten, welche 2,4-Toluylendiisocyanat und 2,6-Toluylendiisocyanat enthalten oder daraus bestehen,
und wenigstens eines Katalysators, wobei die Komponente K1 und die Komponente K2 in einem Verhältnis einer Isocyanat-Kennzahl von 90 bis 125 zueinander vorliegen.

Wird im Folgenden offenbart, dass es sich um die Hydroxylzahl gemäß DIN 53240 handelt, so wird darunter insbesondere die Hydroxylzahl nach DIN 53240-1:2013-06 verstanden.
Ein weiterer Aspekt der Erfindung ist ein Verfahren zur Herstellung von Polyurethanschaumstoffen, vorzugsweise von Polyurethanweichschaumstoffen, durch Umsetzung von

A1 ≥ 40 bis ≤ 100 Gew.-Teile, bevorzugt ≥ 60 bis ≤ 100 Gew.-Teile, besonders bevorzugt ≥ 80 bis ≤ 100 Gew.-Teile eines oder mehrerer Polyethercarbonatpolyole mit einer Hydroxylzahl gemäß DIN 53240 von ≥ 20 mg KOH/g bis ≤ 120 mg KOH/g,
A2 ≤ 60 bis ≥ 0 Gew.-Teile, bevorzugt ≤ 40 bis ≥ 0,1 Gew.-Teile, besonders bevorzugt ≤ 20 bis ≥ 5 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von 0,10 bis 59,0 Gew.-%, bevorzugt 1 bis 30 Gew.-%, stärker bevorzugt 5 bis 15 Gew.-% und/oder einem Gehalt an Propylenoxid von 40 bis 99,9 Gew.-%, bevorzugt 70 bis 99 Gew.-%, stärker bevorzugt 85 bis 95 Gew-.%, wobei die Polyetherpolyole A2 frei von Carbonateinheiten sind,
A3 ≤ 20 bis ≥ 0 Gew.-Teilen, bevorzugt 0,1 bis 10 Gew.-Teilen, bezogen auf die Summe der Gew.-Teile der Komponenten A1 und A2, eines oder mehrerer Polyetherpolyole mit einer Hydroxylzahl gemäß DIN 53240 ≥ 20 mg KOH/g bis ≤ 250 mg KOH/g, und einem Gehalt an Ethylenoxid von > 60 Gew.-%, wobei die Polyetherpolyole A3 frei von Carbonateinheiten sind,
A4 ≤ 40 bis ≥ 0 Gew.-Teilen, bevorzugt 0,1 bis 10 Gew.-Teilen, bezogen auf die Summe der Gew.-Teile der Komponenten A1 und A2, eines oder mehrerer Polymerpolyole, PHD-Polyole und/oder PIPA-Polyole,
A5 ≤ 40 bis ≥ 0 Gew.-Teilen, bevorzugt 0,1 bis 10 Gew.-Teilen, bezogen auf die Summe der Gew.-Teile der Komponenten A1 und A2, Polyole, die nicht unter die Definition der Komponenten A1 bis A4 fallen,
B gegebenenfalls
B1) Katalysatoren und/oder
B2) Hilfs- und Zusatzstoffen
C Wasser und/oder physikalischen Treibmitteln,
mit
D Di und/oder Polyisocyanaten,

wobei die Herstellung bei einer Kennzahl von ≥ 90 bis ≤ 120 erfolgt,
wobei alle Gewichtsteilangaben der Komponenten A1, A2, A3, A4, A5 so normiert sind, dass die Summe der Gewichtsteile A1 + A2 in der Zusammensetzung 100 ergibt,
dadurch gekennzeichnet, dass die Herstellung in Gegenwart von Komponente K erfolgt.
Die Komponenten A1 bis A5 beziehen sich jeweils auf "eine oder mehrere" der genannten Verbindungen. Bei

Verwendung mehrerer Verbindungen einer Komponente entspricht die Mengenangabe der Summe der Gewichtsteile der Verbindungen.

In einer bevorzugten Ausführungsform enthält Komponente A

A1 ≥ 65 bis ≤ 75 Gew.-Teile, höchst bevorzugt > 68 bis ≤ 72 Gew.-Teile eines oder mehrerer Polyethercarbonatpolyole mit einer Hydroxylzahl gemäß DIN 53240 von ≥ 20 mg KOH/g bis ≤ 120 mg KOH/g sowie vorzugsweise einem $CO_2$-Gehalt von 15 bis 25 Gew.-%, und

A2 ≤ 35 bis ≥ 25 Gew.-Teile, höchst bevorzugt ≤ 32 bis ≥ 28 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von 0,10 bis 59,0 Gew.-%, bevorzugt 1 bis 30 Gew.-%, stärker bevorzugt 5 bis 15 Gew.-% und/oder einem Gehalt an Propylenoxid von 40 bis 99,9 Gew.-%, bevorzugt 70 bis 99 Gew.-%, stärker bevorzugt 85 bis 95 Gew-.%, wobei die Polyetherpolyole A2 frei von Carbonateinheiten sind,

wobei die Komponente A vorzugsweise frei ist von Komponente A3 und/oder A4.

In einer anderen Ausführungsform umfasst Komponente A

A1 ≥ 65 bis ≤ 75 Gew.-Teile, bevorzugt > 68 bis ≤ 72 Gew.-Teile eines oder mehrerer Polyethercarbonatpolyole mit einer Hydroxylzahl gemäß DIN 53240 von ≥ 20 mg KOH/g bis ≤ 120 mg KOH/g sowie vorzugsweise einem $CO_2$-Gehalt von 15 bis 25 Gew.-%, und

A2 ≤ 35 bis ≥ 25 Gew.-Teile, bevorzugt ≤ 32 bis ≥ 28 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von 0,10 bis 59,0 Gew.-%, bevorzugt 1 bis 30 Gew.-%, stärker bevorzugt 5 bis 15 Gew.-% und/oder einem Gehalt an Propylenoxid von 40 bis 99,9 Gew.-%, bevorzugt 70 bis 99 Gew.-%, stärker bevorzugt 85 bis 95 Gew-.%, wobei die Polyetherpolyole A2 frei von Carbonateinheiten sind,

A3 ≤ 20 bis ≥ 2 Gew.-Teile, bevorzugt ≤ 10 bis ≥ 2 Gew.-Teile, bezogen auf die Summe der Gew.-Teile der Komponenten A1 und A2, eines oder mehrerer Polyetherpolyole mit einer Hydroxylzahl gemäß DIN 53240 ≥ 20 mg KOH/g bis ≤ 250 mg KOH/g, und einem Gehalt an Ethylenoxid von > 60 Gew.-%, wobei die Polyetherpolyole A3 frei von Carbonateinheiten sind, wobei die Komponente A vorzugsweise frei ist von Komponente A4.

In einer weiteren Ausführungsform umfasst Komponente A

A1 ≥ 40 bis ≤ 100 Gew.-Teile, bevorzugt ≥ 60 bis ≤ 100 Gew.-Teile, besonders bevorzugt ≥ 80 bis ≤ 100 Gew.-Teile, höchst bevorzugt ≥ 65 bis ≤ 75 Gew.-Teile eines oder mehrerer Polyethercarbonatpolyole mit einer Hydroxylzahl gemäß DIN 53240 von ≥ 20 mg KOH/g bis ≤ 120 mg KOH/g sowie vorzugsweise einem $CO_2$-Gehalt von 15 bis 25 Gew.-%, und

A2 ≤ 60 bis ≥ 0 Gew.-Teile, bevorzugt ≤ 40 bis ≥ 0 Gew.-Teile, besonders bevorzugt ≤ 20 bis ≥ 0 Gew.-Teile, höchst bevorzugt ≤ 35 bis ≥ 25 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von 0,10 bis 59,0 Gew.-%, bevorzugt 1 bis 30 Gew.-%, stärker bevorzugt 5 bis 15 Gew.-% und/oder einem Gehalt an Propylenoxid von 40 bis 99,9 Gew.-%, bevorzugt 70 bis 99 Gew.-%, stärker bevorzugt 85 bis 95 Gew-.%, wobei die Polyetherpolyole A2 frei von Carbonateinheiten sind,

A4 ≤ 40 bis ≥ 0,01 Gew.-Teile, bevorzugt ≤ 20 bis ≥ 0,01 Gew.-Teile, besonders bevorzugt ≤ 20 bis ≥ 1 Gew.-Teile, höchst bevorzugt ≤ 20 bis ≥ 2 Gew.-Teile, bezogen auf die Summe der Gew.-Teile der Komponenten A1 und A2, eines oder mehrerer Polymerpolyole, PHD-Polyole und/oder PIPA-Polyole,

A5 ≤ 40 bis ≥ 0 Gew.-Teilen, bevorzugt ≤ 20 bis ≥ 0,01 Gew.-Teile, bezogen auf die Summe der Gew.-Teile der Komponenten A1 und A2, Polyole, die nicht unter die Definition der Komponenten A1 bis A4 fallen, wobei die Komponente A vorzugsweise frei ist von Komponente A3. Dabei sind die angegebenen Bereiche und Vorzugsbereiche der Komponenten A1, A2, A4 und A5 miteinander frei kombinierbar.

Im Folgenden sind die im erfindungsgemäßen Verfahren eingesetzten Komponenten näher beschrieben.

Komponente A1

Die Komponente A1 umfasst ein Polyethercarbonatpolyol mit einer bevorzugten Hydroxylzahl (OH-Zahl) gemäß DIN 53240-1:2013-06 von ≥ 20 mg KOH/g bis ≤ 120 mg KOH/g, vorzugsweise von ≥ 20 mg KOH/g bis ≤ 100 mg KOH/g, besonders bevorzugt von ≥ 25 mg KOH/g bis ≤ 90 mg KOH/g, welches erhalten werden kann durch Copolymerisation von Kohlendioxid, einem oder mehreren Alkylenoxiden, in Gegenwart eines oder mehrerer H-funktioneller Startermoleküle, wobei das Polyethercarbonatpolyol vorzugsweise einen $CO_2$-Gehalt von 15 bis 25 Gew.-% aufweist. Bevorzugt

umfasst Komponente A1 ein Polyethercarbonatpolyol, welches erhältlich ist durch Copolymerisation von ≥ 2 Gew.-% bis ≤ 30 Gew.-% Kohlendioxid und ≥ 70 Gew.-% bis ≤ 98 Gew.-% einem oder mehreren Alkylenoxiden, in Gegenwart eines oder mehrerer H-funktioneller Startermoleküle mit einer durchschnittlichen Funktionalität von ≥ 1 bis ≤ 6, bevorzugt von ≥ 1 bis ≤ 4, besonders bevorzugt von ≥ 2 bis ≤ 3. Unter "H-funktionell" wird im Sinne der Erfindung eine Starterverbindung verstanden, die gegenüber Alkoxylierung aktive H-Atome aufweist.

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Vorzugsweise weisen die erfindungsgemäß eingesetzten Polyethercarbonatpolyole zwischen den Carbonatgruppen auch Ethergruppen auf, was in Formel (II) schematisch dargestellt wird. In dem Schema gemäß Formel (II) steht R für einen organischen Rest wie Alkyl, Alkylaryl oder Aryl, der jeweils auch Heteroatome wie beispielsweise O, S, Si usw. enthalten kann, e und f stehen für eine ganzzahlige Zahl. Das im Schema gemäß Formel (II) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (II) gezeigte Polyethercarbonatpolyol beschränkt ist. In Bezug auf Formel (II) bedeutet dies, dass das Verhältnis von e/f bevorzugt von 2 : 1 bis 1 : 20, besonders bevorzugt von 1,5 : 1 bis 1 : 10 beträgt.

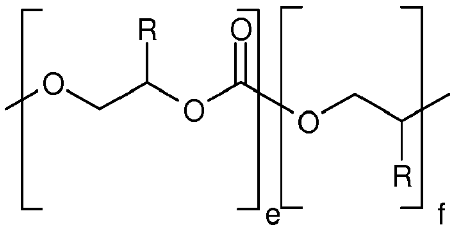

(II)

Der Anteil an eingebautem $CO_2$ ("aus Kohlendioxid stammende Einheiten"; "$CO_2$-Gehalt" in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels 1H-NMR (ein geeignetes Gerät ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im 1H-NMR (bezogen auf TMS = 0 ppm) sind wie folgt:

Cyclisches Propylencarbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Gewichtsanteil (in Gew.-%) polymer-gebundenen Carbonats (LC') in der Reaktionsmischung wurde nach Formel (III) berechnet,

$$LC' = \frac{[F(5{,}1-4{,}8) - F(4{,}5)] * 102}{N} * 100\% \qquad \text{(III)}$$

wobei sich der Wert für N ("Nenner" N) nach Formel (IV) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad \text{(IV)}$$

Dabei gelten folgende Abkürzungen:

F(4,5) = Fläche der Resonanz bei 4,5 ppm für cyclisches Carbonat (entspricht einem H Atom)

F(5,1-4,8) = Fläche der Resonanz bei 5,1-4,8 ppm für Polyethercarbonatpolyol und einem H-Atom für cyclisches Carbonat.

F(2,4) = Fläche der Resonanz bei 2,4 ppm für freies, nicht abreagiertes PO

F(1,2-1,0) = Fläche der Resonanz bei 1,2-1,0 ppm für Polyetherpolyol

F(1,6-1,52) = Fläche der Resonanz bei 1,6 bis 1,52 ppm für 1,8 Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (V) berechnet,

$$CC' = \frac{F(4,5) * 102}{N} * 100\% \qquad (V)$$

wobei sich der Wert für N nach Formel (IV) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Beispielsweise umfasst die Herstellung von Polyethercarbonatpolyolen gemäß A1, indem:

($\alpha$) eine H-funktionelle Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Starterverbindung oder dem Gemisch von mindestens zwei H-funktionellen Starterverbindungen vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) ein oder mehrere der Alkylenoxide und Kohlendioxid zu der aus Schritt ($\beta$) resultierenden Mischung zugesetzt werden, wobei die in Schritt ($\beta$) eingesetzten Alkylenoxide gleich oder verschieden sein können von den bei Schritt ($\gamma$) eingesetzten Alkylenoxiden.

Allgemein können zur Herstellung der Polyethercarbonatpolyole A1 Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

In einer bevorzugten Ausführungsform der Erfindung liegt der Anteil an Ethylenoxid an der insgesamt eingesetzten Menge an Propylenoxid und Ethylenoxid bei ≥ 0 und ≤ 90 Gew.-%, bevorzugt bei ≥ 0 und ≤ 50 Gew.-% und besonders bevorzugt frei von Ethylenoxid.

Als geeignete H-funktionelle Startverbindung können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Starterverbindung wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht Mn im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mn im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht Mn von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Starterverbindungen eingesetzt werden. Insbesondere werden Polyethercarbonatpolyole, die nach dem oben beschriebenen Verfahren hergestellt werden, eingesetzt. Diese als H-funktionelle Starterverbindungen eingesetzten Polyethercarbonatpolyole werden hierzu in einem separaten Reaktionsschritt zuvor hergestellt.

Bevorzugte H-funktionelle Starterverbindungen sind Alkohole der allgemeinen Formel (VIII),

$$HO-(CH_2)x-OH \qquad (VIII)$$

wobei x eine Zahl von 1 bis 20, bevorzugt eine gerade Zahl von 2 bis 20 ist. Beispiele für Alkohole gemäß Formel (VIII) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht Mn im Bereich von 62 bis 4500 g/mol und insbesondere ein zahlenmittleres Molekulargewicht Mn im Bereich von 62 bis 3000 g/mol, ganz besonders bevorzugt ein Molekulargewicht von 62 bis 1500 g/mol. Bevorzugt haben die Polyetherpolyole eine Funktionalität von $\geq 2$ bis $\leq 3$.

In einer bevorzugten Ausführungsform der Erfindung ist das Polyethercarbonatpolyol A1 durch Anlagerung von Kohlendioxid und Alkylenoxiden an H-funktionelle Starterverbindungen unter Verwendung von Multimetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Starterverbindungen unter Verwendung von DMC-Katalysatoren ist beispielsweise aus der EP-A 0222453, WO-A 2008/013731 und EP-A 2115032 bekannt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht Mn größer als 500 g/mol enthalten.

Der DMC-Katalysator wird zumeist in einer Menge von $\leq 1$ Gew.-%, vorzugsweise in einer Menge von $\leq 0,5$ Gew.-%, besonders bevorzugt in einer Menge von $\leq 500$ ppm und insbesondere in einer Menge von $\leq 300$ ppm, jeweils bezogen auf das Gewicht des Polyethercarbonatpolyols eingesetzt.

In einer bevorzugten Ausführungsform der Erfindung weist das Polyethercarbonatpolyol A1 einen Gehalt an

Carbonatgruppen ("aus Kohlendioxid stammenden Einheiten"), berechnet als $CO_2$, von ≥ 2,0 und ≤ 30,0 Gew.-%, bevorzugt von ≥ 5,0 und ≤ 28,0 Gew.-% und besonders bevorzugt von ≥ 10,0 und ≤ 25,0 Gew.-% auf.

In einer weiteren Ausführungsform des erfindungsgemäßen Verfahrens weisen das oder die Polyethercarbonatpolyole gemäß A1 eine Hydroxylzahl von ≥ 20 mg KOH/g bis ≤ 250 mg KOH/g auf und sind erhältlich durch Copolymerisation von ≥ 2,0 Gew.-% bis ≤ 30,0 Gew.-% Kohlendioxid und > 70 Gew.-% bis ≤ 98 Gew.-% Propylenoxid in Gegenwart eines hydroxyfunktionellen Startermoleküls, wie beispielsweise Trimethylolpropan und/oder Glycerin und/oder Propylenglykol und/oder Sorbitol. Die Hydroxylzahl kann gemäß DIN 53240 bestimmt werden.

In einer weiteren Ausführungsform wird ein Polyethercarbonatpolyol A1 eingesetzt, enthaltend Blöcke gemäß Formel (II) wobei das Verhältnis e/f von 2 : 1 bis 1 : 20 beträgt.

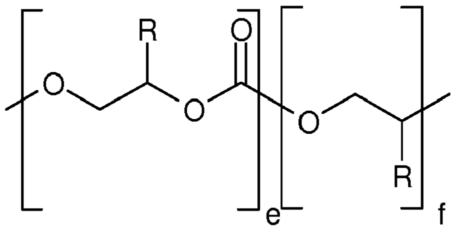

(II)

In einer weiteren Ausführungsform der Erfindung wird Komponente A1 zu 100 Gew.-Teilen eingesetzt.

Komponente A2

Die Komponente A2 umfasst Polyetherpolyole, bevorzugt mit einer Hydroxylzahl gemäß DIN 53240 von ≥ 20 mg KOH/g bis ≤ 250 mg KOH/g, vorzugsweise von ≥ 20 bis ≤ 112 mg KOH/g und besonders bevorzugt > 20 mg KOH/g bis ≤ 80 mg KOH/g und ist frei von Carbonateinheiten.

Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von ≥ 2 bis ≤ 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und /oder Glycerin und/oder Trimethylolpropan und /oder Sorbitol eingesetzt.

Die Polyetherpolyole gemäß A2 weisen einen Gehalt von ≥ 0,1 bis ≤ 59,0 Gew.-%, vorzugsweise von ≥ 1 bis ≤ 30 Gew.-%, besonders bevorzugt > 5 bis ≤ 15 Gew.-% an Ethylenoxid und/oder einen Gehalt von 40 bis 99,9 Gew.-%, bevorzugt 70 bis 99 Gew.-%, stärker bevorzugt 85 bis 95 Gew-.% an Propylenoxid auf. Besonders bevorzugt sind die Propylenoxideinheiten endständig.

Komponente A3

Die Komponente A3 umfasst Polyetherpolyole mit einer Hydroxylzahl gemäß DIN 53240 ≥ 20 mg KOH/g bis ≤ 250 mg KOH/g, vorzugsweise von ≥ 20 bis ≤ 112 mg KOH/g und besonders bevorzugt > 20 mg KOH/g bis ≤ 80 mg KOH/g.

Die Herstellung der Komponente A3 erfolgt im Prinzip analog der der Komponente A2, wobei jedoch ein Gehalt an Ethylenoxid im Polyetherpolyol von > 60 Gew.-%, bevorzugt > 65 Gew.-% eingestellt wird.

Als Alkylenoxide und H-funktionelle Starterverbindungen kommen die gleichen in Frage, wie für Komponente A2 beschrieben.

Als H-funktionelle Starterverbindungen kommen jedoch bevorzugt solche in Frage, die eine Funktionalität von ≥ 3 bis ≤ 6, besonders bevorzugt von 3 aufweisen, so dass Polyethertriole entstehen. Bevorzugte Starterverbindungen mit einer Funktionalität von 3 sind Glycerin und/oder Trimethylolpropan, besonders bevorzugt ist Glycerin.

In einer bevorzugten Ausführungsform ist die Komponente A3 ein Glycerin-gestarteter trifunktioneller Polyether mit einem Ethylenoxidanteil von 68 bis 73 Gew.-% und einer OH-Zahl von 35 bis 40 mg KOH/g.

Komponente A4

Die Komponente A4 umfasst Polymerpolyole, PHD-Polyole und PIPA-Polyole. Polymerpolyole sind Polyole, die Anteile von durch radikalische Polymerisation geeigneter Monomere wie Styrol oder Acrylnitril in einem Basispolyol, wie z.B. einem Polyetherpolyol und/oder Polyethercabonatpolyol, erzeugten festen Polymeren enthalten.

PHD (Polyharnstoffdispersion)-Polyole werden beispielsweise hergestellt durch *in situ* Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol und/oder Polyethercarbonatpolyol, hergestellt durch Alkoxylierung eines trifunktionellen Starters (wie beispielsweise Glycerin und/oder Trimethylolpropan), im Falle des Polyethercarbonatpolyols in Gegenwart von Kohlendioxid.. Verfahren zur Herstellung von PHD-Dispersionen sind beispielsweise beschrieben in US 4,089,835 und US 4,260,530.

Bei den PIPA-Polyolen handelt es sich um durch Polyisocyanat-Polyaddition mit Alkanolaminen-modifizierte, vorzugsweise Triethanolamin-modifizierte Polyetherpolyole und/oder Polyethercarbonatpolyole, wobei das Polyether(carbonat)polyol eine Funktionalität von 2,5 bis 4 und eine Hydroxylzahl von ≥ 3 mg KOH/g bis ≤ 112 mg KOH/g (Molekulargewicht 500 bis 18000) aufweist. Vorzugsweise ist das Polyetherpolyol "EOcapped", d.h. das Polyetherpolyol besitzt terminale Ethylenoxidgruppen. PIPA-Polyole sind in GB 2 072 204 A, DE 31 03 757 A1 und US 4 374 209 A eingehend beschrieben.

Komponente A5

Als Komponente A5 können alle dem Fachmann bekannten Polyhydroxyverbindungen eingesetzt werden, die nicht unter die Definition der Komponenten A1 bis A4 fallen, und bevorzugt eine mittlere OH-Funktionalität > 1,5 aufweisen.

Dies können beispielsweise niedermolekulare Diole (z.B. 1,2-Ethandiol, 1,3- bzw. 1,2 Propandiol, 1,4-Butandiol), Triole (z.B. Glycerin, Trimethylolpropan) und Tetraole (z.B. Pentaerythrit), Polyesterpolyole, Polythioetherpolyole oder Polyacrylatpolyole, sowie Polyetherpolyole oder Polycarbonatpolyole, die nicht unter die Definition der Komponenten A1 bis A4 fallen, sein. Es können z.B. auch Ethylendiamin und Triethanolamin gestartete Polyether eingesetzt werden. Diese Verbindungen zählen nicht zu den Verbindungen gemäß der Definition der Komponente B2.

Komponente B

Als Katalysatoren gemäß der Komponente B1 werden vorzugsweise

a) aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff) und/oder
b) Zinn(II)-Salze von Carbonsäuren
eingesetzt.

Es werden insbesondere die Zinn(II)-Salze von Carbonsäuren eingesetzt, wobei die jeweils zugrundeliegende Carbonsäure von 2 bis 24 Kohlenstoffatome aufweist. Beispielsweise werden als Zinn(II)-Salze von Carbonsäuren eine oder mehrere Verbindungen ausgewählt aus der Gruppe bestehend aus Zinn(II)-Salz der 2-Ethylhexansäure (d.h. Zinn(II)-(2-ethylhexanoat) oder Zinnoktoat), Zinn(II)-Salz der 2-Butyloctansäure, Zinn(II)-Salz der 2-Hexyldecansäure, Zinn(II)-Salz der Neodecansäure, Zinn(II)-Salz der Isononansäure, das Zinn(II)-Salz der Ölsäure, Zinn(II)-Salz der Ricinolsäure und Zinn(II)laurat eingesetzt.
In einer bevorzugten Ausführungsform der Erfindung wird mindestens ein Zinn(II)-Salz der Formel (IX)

$$Sn(CxH_{2x+1}COO)_2 \qquad (IX)$$

eingesetzt, wobei x eine ganze Zahl von 8 bis 24, bevorzugt 10 bis 20, besonders bevorzugt von 12 bis 18 bedeutet. Besonders bevorzugt ist in Formel (IX) die Alkylkette $C_xH_{2x+1}$ des Carboxylats eine verzweigte Kohlenstoffkette, d.h. $C_xH_{2x+1}$ ist eine iso-Alkylgruppe.
Höchst bevorzugt werden als Zinn(II)-Salze von Carbonsäuren eine oder mehrere Verbindungen ausgewählt aus der Gruppe bestehend aus Zinn(II)-Salz der 2-Butyloctansäure, d.h. Zinn(II)-(2-butyloctoat), Zinn(II)-Salz der Ricinolsäure, d.h. Zinn(II)-ricinoleat und Zinn(II)-Salz der 2-Hexyldecansäure, d.h. Zinn(II)-(2-hexyldecanoat) eingesetzt.

In einer anderen bevorzugten Ausführungsform der Erfindung wird als Komponente B1

B1.1 ≥ 0,05 bis ≤ 1,5 Gew.-Teilen, bezogen auf die Summe der Gew.-Teile der Komponenten A1 und A2, Harnstoff und/oder Derivate des Harnstoffs und
B1.2 ≥ 0,03 bis ≤ 1,5 Gew.-Teilen, bezogen auf die Summe der Gew.-Teile der Komponenten A1 und A2, anderer Katalysatoren als die der Komponente B1.2, wobei der Gehalt an aminischen Katalysatoren in der Komponente B1.2 maximal 50 Gew.-% bezogen auf Komponente B1 betragen darf, eingesetzt.

Komponente B1.1 umfasst Harnstoff und Derivate des Harnstoffs. Als Derivate des Harnstoffs seien beispielsweise genannt: Aminoalkylharnstoffe, wie z.B. (3-Dimethylaminopropylamin)-harnstoff und 1,3-Bis[3-(dimethylamino)propyl]harnstoff. Es können auch Mischungen von Harnstoff und Harnstoffderivaten eingesetzt werden. Bevorzugt wird ausschließlich Harnstoff in Komponente B1.1 eingesetzt. Die Komponente B1.1 wird in Mengen von ≥ 0,05 bis ≤ 1,5 Gew.-Teilen, bevorzugt von ≥ 0,1 bis ≤ 0,5 Gew.-Teilen, besonders bevorzugt von ≥ 0,25 bis ≤ 0,35 Gew.-Teilen, bezogen auf die Summe der Gew.-Teile der Komponenten A1 bis A2, eingesetzt.
Die Komponente B1.2 wird in Mengen von ≥ 0,03 bis ≤ 1,5 Gew.-Teilen, bevorzugt ≥ 0,03 bis ≤ 0,5 Gew.-Teilen, besonders bevorzugt von ≥ 0,1 bis ≤ 0,3 Gew.-Teilen, ganz besonders bevorzugt von ≥ 0,2 bis ≤ 0,3 Gew.-Teilen, bezogen auf die Summe der Gew.-Teile der Komponenten A1 bis A2, eingesetzt.

Vorzugsweise beträgt der Gehalt an aminischen Katalysatoren in der Komponente B1.2 maximal 50 Gew-% bezogen auf Komponente B1.1, besonders bevorzugt maximal 25 Gew.-% bezogen auf Komponente B1.1. Ganz besonders bevorzugt ist Komponente B1.2 frei von aminischen Katalysatoren. Als Katalysatoren der Komponente B1.2 können z.B. die oben beschriebenen Zinn(II)-Salze von Carbonsäuren eingesetzt werden.

Als in geringen Mengen (s.o.) gegebenenfalls mitzuverwendende aminische Katalysatoren seien genannt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine und cycloaliphatische Amidine.

Zu den in B1.2 genannten "aminischen Katalysatoren" gehören nicht Harnstoff oder seine Derivate.

Ein nicht-alkalische Medium kann vorzugsweise dadurch erreicht werden, dass als Katalysatoren gemäß Komponente B1 Harnstoff und/oder Derivate des Harnstoffs eingesetzt werden, und keine aminischen Katalysatoren eingesetzt werden.

Als Komponente B2 können Hilfs- und Zusatzstoffe eingesetzt werden, wie

a) oberflächenaktive Zusatzstoffe, wie Emulgatoren und Schaumstabilisatoren insbesondere solche mit niedriger Emission wie beispielsweise Produkte der Tegostab®-Serie
b) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel (verschieden von Komponente K3; wie beispielsweise Ammoniumpolyphosphat), weitere Stabilisatoren gegen Alterungs- und Witterungseinflüsse, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Komponente C

Als Komponente C werden Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente C eingesetzt.

Komponente D

Die Di- und/oder Polyisocyanate der vorliegenden Erfindung enthalten oder bestehen aus 2,4-Toluylendiisocyanat und 2,6-Toluylendiisocyanat. Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, zum Beispiel das 2,4-und 2,6-Toluylendiisocyanat, sowie beliebige Gemische dieser mit Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird eine Mischung von 2,4- und 2,6-Toluylendiisocyanat mit 4,4'- und/oder 2,4'- und/oder 2,2'-Diphenylmethandiisocyanat und Polyphenylpolymethylenpolyisocyanat ("Mehrkern-MDI") eingesetzt. Besonders bevorzugt wird 2,4- und/oder 2,6-Toluylendiisocyanat eingesetzt.

In einer weiteren Ausführungsform des erfindungsgemäßen Verfahrens umfasst die IsocyanatKomponente D 100% 2,4- Toluylendiisocyanat.

In einer bevorzugten Ausführungsform des erfindungsgemäßen Verfahrens beträgt die Kennzahl ≥ 90 bis ≤ 120. Vorzugsweise liegt die Kennzahl in einem Bereich von ≥ 100 bis ≤ 115, besonders bevorzugt ≥ 102 bis ≤ 110. Die Kennzahl (Index) gibt das prozentuale Verhältnis der tatsächlich eingesetzten Isocyanat-Menge zur stöchiometrischen, d.h. für die Umsetzung der OH-Äquivalente berechneten Menge an Isocyanat-Gruppen (NCO)-Menge an.

$$\text{Kennzahl} = [\text{Isocyanat-Menge eingesetzt}) : (\text{Isocyanat-Menge berechnet}) \bullet 100 \quad (XI)$$

In einem bevorzugten Aspekt werden die Komponenten wie folgt eingesetzt:

Komponente A1 in 70 bis 100 Gew.-%, insbesondere 90 Gew.-% oder 100 Gew.-%; und/oder
Komponente A2 in 0 bis 30 Gew.-%, insbesondere 10 Gew.-% oder 0 Gew.-%, wobei die Summe der Komponenten A1 und A2 100 Gew.-% beträgt; und/oder
Komponente B1 in 0,02 bis 0,8 Gew-%, bevorzugt 0,06 bis 0,25 Gew-%, insbesondere bevorzugt 0,22 Gew-%, bezogen auf 100 Gew.-% von A1 und A2; und/oder
Komponente B2 in 0,1 bis 6 Gew.-%, bevorzugt 0,2 bis 1,2 Gew.-%, insbesondere bevorzugt 1,3 Gew.-%, bezogen auf 100 Gew.-% von A1 und A2; und/oder
Komponente C in 0,8 bis 3,0 Gew.-%, bevorzugt 1,9 Gew.-%, bezogen auf 100 Gew.-% von A1 und A2; und/oder
Komponente E in 2,0 Gew.-% bis 12 Gew-%, bevorzugt 2, 0 bis 8,0 Gew.-%, bezogen auf 100 Gew.-% von A1 und A2.

Zur Herstellung der Polyurethanschaumstoffe werden die Reaktionskomponenten bevorzugter Weise nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanschaumstoffe liegen vorzugsweise als Polyurethanweichschaumstoffe vor und können als Form- oder auch als Blockschaumstoffe, vorzugsweise als Blockschaumstoffe hergestellt werden. Gegenstand der Erfindung sind daher ein Verfahren zur Herstellung der Polyurethanschaumstoffe, die nach diesen Verfahren hergestellten Polyurethanschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst.

Die nach der Erfindung erhältlichen Polyurethanschaumstoffe vorzugsweise Polyurethanweichschaumstoffe, finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

Die erfindungsgemäßen Weichschäume weisen bevorzugt eine Rohdichte gemäß DIN EN ISO 3386-1-98 im Bereich von ≥ 16 bis ≤ 60 kg/m$^3$, bevorzugt ≥ 20 bis ≤ 50 kg/m$^3$ auf.

## Beispiele

Komponente A:

A1-1 CARDYON® LC05 ist Polyolgemisch bestehend aus 70 Gew.-% DESMOPHEN 95LC04 und 30 Gew.-% ARCOL POLYOL 1108 mit einer OH-Zahl von 54 mg KOH/g; $CO_2$-Gehalt: ca. 14 %; DESMOPHEN 95LC04: Polyethercarbonatpolyol, Glycerin-gestartet; Propylenoxid-basiert; hergestellt mittels DMC-Katalyse OH-Zahl: 56 mg KOH/g. ARCOL POLYOL 1108: Propylenoxid-/ Ethylenoxid-basiertes, Polyol; hergestellt mittels DMC-Katalyse; Starter: Glycerin; OH-Zahl: 48 mg KOH/g

A1-2 DESMOPHEN 41WB01 ist ein kommerziell erhältliches Ethylenoxid-/ Propylenoxidbasiertes Polyol (Covestro AG) mit einem sehr hohen Anteil an Ethylenoxid-Gruppen; Starter: Glycerin; KOH-Katalyse; OH-Zahl von 37 mg KOH/g

Komponente B:

B1-1 Bis[2-dimethylamino)ethyl]ether (70 Gew.-%) in Dipropylenglykol (30 Gew.-%) (Niax® Catalyst A-1, Momentive Performance Chemicals, Leverkusen, Deutschland).

B1-2 1,4-Diazabicyclo[2.2.2]octan (33 Gew.-%) in Dipropylenglykol (67 Gew.-%) (Dabco® 33 LV, Evonik, Essen, Deutschland).

B2-1 Polyethersiloxan-basierender Schaumstoffstabilisator Tegostab® B 8244 (Evonik, Essen, Deutschland).

B2-2 Polyethersiloxan-basierender Schaumstoffstabilisator Tegostab® B 8002 (Evonik, Essen, Deutschland).

Komponente C: Wasser

Komponente D:

D-1: Gemisch aus 2,4- und 2,6-TDI im Gewichtsverhältnis 80 : 20 und mit einem NCO-Gehalt von 48 bis 48,2 Gew.-%, kommerziell erhältlich als Desmodur T 80 (Covestro AG).
D-2: Gemisch aus 2,4- und 2,6-TDI im Gewichtsverhältnis 67 : 33 und mit einem NCO-Gehalt von 48-48,2 Gew.-%, kommerziell erhältlich als Desmodur T 65 (Covestro AG).

Komponente E:

E-1: Diisodecylsebacat, kommerziell erhältlich als Uniplex DIDS
E-2: Tris(2-ethylhexyl) O-acetylcitrat, kommerziell erhältlich als Citrofol AHII
E-3: Bis(2-ethylhexyl)adipat, kommerziell erhältlich als Oxsoft DOA

## Herstellung der Polyurethanschaumstoffe

Unter den für die Herstellung von Polyurethanschaumstoffen üblichen Verarbeitungsbedingungen werden die Ausgangskomponenten im Einstufenverfahren mittels Blockverschäumung verarbeitet.

Das Raumgewicht wurde bestimmt gemäß DIN EN ISO 845:2009-10.
Die Stauchhärte (CLD 40%) wurde bestimmt gemäß DIN EN ISO 3386-1:2015-10
bei einer Verformung von 40%, 1. bzw. 4. Zyklus.

Die Zugfestigkeit und die Bruchdehnung wurden bestimmt gemäß
DIN EN ISO 1798:2008-04.
Der Druckverformungsrest (DVR 90 %) wurde bestimmt gemäß DIN EN ISO 1856:2008-01 bei 90% Verformung.
Der Druckverformungsrest (DVR 50 %) wurde bestimmt gemäß DIN EN ISO 1856:2008-01 (22 h, 70°C) bei 50% Verformung.

In der folgenden Tabelle sind Vergleichsbeispiele als VBsp. und erfindungsgemäße Beispiele als Bsp. angegeben.

Tabelle 1: VBsp. 1 und Bsp. 1 bis 6, Fortführung der Tabelle auf der nächsten Seite Bsp. 7-12; pphp = parts per 100 parts polyol

| | Einheit | VBsp. 1 | Bsp. 1 | Bsp. 2 | Bsp. 3 | Bsp. 4 | Bsp. 5 | Bsp. 6 |
|---|---|---|---|---|---|---|---|---|
| CARDYON® LC05 | [pphp] | 90,00 | 90,00 | 90,00 | 90,00 | 100,00 | 90,00 | 90,00 |
| DESMOPHEN 41WB01 | [pphp] | 10,00 | 10,00 | 10,00 | 10,00 | | 10,00 | 10,00 |
| Wasser (zugesetzt) | [pphp] | 1,90 | 1,90 | 1,90 | 1,90 | 1,90 | 1,90 | 1,90 |
| Tegostab B 8244 | [pphp] | 1,20 | 1,20 | 1,20 | | | 1,20 | 1,20 |
| Tegostab B 8002 | [pphp] | | | | 1,20 | 1,20 | | |
| Uniplex DIDS | [pphp] | | 5,00 | 8,00 | 8,00 | 8,00 | | |
| Citrofol AHII | [pphp] | | | | | | 5,00 | 8,00 |
| Oxsoft DOA | [pphp] | | | | | | | |
| Dabco 33 LV | [pphp] | 0,10 | 0,10 | 0,10 | 0,10 | 0,10 | 0,10 | 0,10 |
| Niax Catalyst A-1 | [pphp] | 0,12 | 0,12 | 0,12 | 0,12 | 0,12 | 0,12 | 0,12 |
| Dabco T-9 (Zinnoktoat) | [pphp] | 0,12 | 0,12 | 0,10 | 0,08 | 0,10 | 0,12 | 0,10 |
| | | | | | | | | |
| DESMODUR T 80 | [pphp] | 13,16 | 19,74 | 26,32 | 23,82 | 26,73 | 19,74 | 26,32 |
| DESMODUR T 65 | [pphp] | 13,16 | 6,58 | | 2,65 | | 6,58 | |
| | | | | | | | | |
| Wasser gesamt | [pphp] | 1,90 | 1,90 | 1,90 | 1,90 | 1,90 | 1,90 | 1,90 |
| INDEX | [-] | 99,0 | 99,0 | 99,0 | 99,0 | 99,0 | 99,0 | 99,0 |
| | | | | | | | | |
| Mechanische Eigenschaften | | | | | | | | |
| Raumgewicht | [kg/m³] | 45,1 | 47,7 | 50,5 | 55,5 | 54,60 | 46,8 | 49,1 |
| Stauchhärte 40 %; 1. Stauchung | [kPa] | 3,5 | 3,2 | 3,38 | 3,69 | 4,55 | 3,36 | 3,76 |
| Stauchhärte 40 %; 4. Stauchung | [kPa] | 2,54 | 2,38 | 2,62 | 2,82 | 3,35 | 2,59 | 2,96 |
| Druckverformungsrest 50 % | [%] | 4,7 | 5,5 | 2,3 | 4,6 | 4,2 | 4,3 | 2,6 |
| Druckverformungsrest 90 % | [%] | 61 | 37,9 | 6,3 | 6,7 | 11,3 | 8,6 | 4,9 |
| Zugfestigkeit | [kPa] | 76 | 68 | 67 | 76 | 65 | 66 | 61 |
| Bruchdehnung | [%] | 197 | 199 | 175 | 149 | 153 | 193 | 172 |

| | Einheit | Bsp. 7 | Bsp. 8 | Bsp. 9 | Bsp. 10 | Bsp. 11 | Bsp. 12 |
|---|---|---|---|---|---|---|---|
| CARDYON® LC05 | [pphp] | 90,00 | 100,00 | 90,00 | 90,00 | 90,00 | 100,00 |
| DESMOPHEN 41WB01 | [pphp] | 10,00 | | 10,00 | 10,00 | 10,00 | |
| Wasser (zugesetzt) | [pphp] | 1,90 | 1,90 | 1,90 | 1,90 | 1,90 | 1,90 |
| Tegostab B 8244 | [pphp] | | | 1,20 | 1,20 | | |
| Tegostab B 8002 | [pphp] | 1,20 | 1,20 | | | 1,20 | 1,20 |
| Uniplex DIDS | [pphp] | | | | | | |
| Citrofol AHII | [pphp] | 8,00 | 8,00 | | | | |
| Oxsoft DOA | [pphp] | | | 5,00 | 8,00 | 8,00 | 8,00 |

| | | | | | | | |
|---|---|---|---|---|---|---|---|
| Dabco 33 LV | [pphp] | 0,10 | 0,10 | 0,10 | 0,10 | 0,10 | 0,10 |
| Niax Catalyst A-1 | [pphp] | 0,12 | 0,12 | 0,12 | 0,12 | 0,12 | 0,12 |
| Dabco T-9 (Zinnoktoat) | [pphp] | 0,08 | 0,10 | 0,12 | 0,10 | 0,08 | 0,10 |
| | | | | | | | |
| DESMODUR T 80 | [pphp] | 23,82 | 26,73 | 19,74 | 26,32 | 23,82 | 26,73 |
| DESMODUR T 65 | [pphp] | 2,65 | | 6,58 | | 2,65 | |
| | | | | | | | |
| Wasser gesamt | [pphp] | 1,90 | 1,90 | 1,90 | 1,90 | 1,90 | 1,90 |
| INDEX | [-] | 99,0 | 99,0 | 99,0 | 99,0 | 99,0 | 99,0 |
| | | | | | | | |
| Mechanische Eigenschaften | | | | | | | |
| Raumgewicht | [kg/m³] | 57,3 | 52 | 46,8 | 48,7 | 53,5 | 54,6 |
| Stauchhärte 40 %; 1. Stauchung | [kPa] | 5,14 | 4,55 | 3,41 | 3,19 | 4,14 | 4,78 |
| Stauchhärte 40 %; 4. Stauchung | [kPa] | 3,96 | 3,41 | 2,68 | 2,5 | 3,17 | 3,63 |
| Druckverformungsrest 50 % | [%] | 2,2 | 2,4 | 2,5 | 3,2 | 1,9 | 2,7 |
| Druckverformungsrest 90 % | [%] | 3,7 | 3,4 | 4,8 | 5,7 | 3,8 | 13,3 |
| Zugfestigkeit | [kPa] | 83 | 78 | 58 | 64 | 72 | 77 |
| Bruchdehnung | [%] | 159 | 166 | 171 | 179 | 149 | 168 |

## Patentansprüche

1. Verfahren zur Herstellung von Polyurethanschaumstoffen durch Umsetzung von

   Komponente A) enthaltend Polyethercarbonatpolyol A1 (Komponente A1) sowie gegebenenfalls eines oder mehrerer Polyetherpolyole (Komponente A2), wobei die Polyetherpolyole A2 frei von Carbonateinheiten sind,
   B) gegebenenfalls

      B1) Katalysatoren, und/oder
      B2) Hilfs- und Zusatzstoffen

   C) Wasser und/oder physikalischen Treibmitteln,
   mit
   D) Di-und/oder Polyisocyanaten, welche 2,4-Toluylendiisocyanat und 2,6-Toluylendiisocyanat enthalten oder daraus bestehen;

   wobei die Herstellung bei einer Kennzahl von 90 bis 125 erfolgt,
   **dadurch gekennzeichnet, dass** die Herstellung in Gegenwart mindestens einer Verbindung E erfolgt, die folgende Formel (I) aufweist:

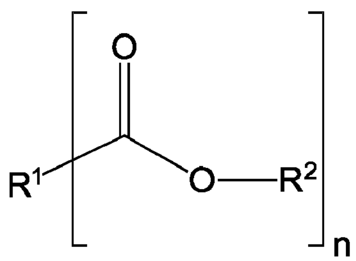

(I)

   wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2, im Falle von verzweigt mindestens 3, Kohlenstoffatomen ist;
$R^2$ ein linearer, verzweigter, substituierter oder unsubstituierter aliphatischer Kohlenwasserstoffrest ist; und
n gleich 1 bis 3 ist.

**2.** Verfahren gemäß Anspruch 1, **dadurch gekennzeichnet, dass** in Formel (I)
$R^1$ ein aromatischer Kohlenwasserstoffrest mit mindestens 6 Kohlenstoffatomen ist oder ein linearer, verzweigter, substituierter oder unsubstituierter aliphatischer Kohlenwasserstoffrest mit mindestens 3 Kohlenstoffatomen ist;
$R^2$ ein linearer, verzweigter, substituierter oder unsubstituierter aliphatischer Kohlenwasserstoffrest mit mindestens 3 Kohlenstoffatomen ist; und
n gleich 1 bis 3 ist.

**3.** Verfahren gemäß Anspruch 1 oder 2, **dadurch gekennzeichnet, dass** die Komponente A die folgende Zusammensetzung aufweist:

A1 40 bis 100 Gew. -Teile eines oder mehrerer Polyethercarbonatpolyole mit einer Hydroxylzahl gemäß DIN 53240-1:2013-06 von 20 mg KOH/g bis 120 mg KOH/g,
A2 0 bis 60 Gew.-Teile eines oder mehrerer Polyetherpolyole mit einer Hydroxylzahl gemäß DIN 53240-1:2013-06 von 20 mg KOH/g bis 250 mg KOH/g und einem Gehalt an Ethylenoxid von 0,1 bis 59 Gew.-%, wobei die Polyetherpolyole A2 frei von Carbonateinheiten sind,
A3 0 bis 20 Gew.-Teile, bezogen auf die Summe der Gew.-Teile der Komponenten A1 und A2, eines oder mehrerer Polyetherpolyole mit einer Hydroxylzahl gemäß DIN 53240-1:2013-06 von 20 mg KOH/g bis 250 mg KOH/g, und einem Gehalt an Ethylenoxid von mindestens 60 Gew.-%, wobei die Polyetherpolyole A3 frei von Carbonateinheiten sind,
A4 0 bis 40 Gew.-Teile, bezogen auf die Summe der Gew.-Teile der Komponenten A1 und A2, eines oder mehrerer Polymerpolyole, PHD-Polyole und/oder PIPA-Polyole,
A5 0 bis 40 Gew.-Teile, bezogen auf die Summe der Gew.-Teile der Komponenten A1 und A2, Polyole, die nicht unter die Definition der Komponenten A1 bis A4 fallen,

wobei alle Gewichtsteilangaben der Komponenten A1, A2, A3, A4, A5 so normiert sind, dass die Summe der Gewichtsteile A1 + A2 in der Zusammensetzung 100 ergibt.

**4.** Verfahren gemäß einem der vorstehenden Ansprüche, **dadurch gekennzeichnet, dass** die mindestens eine Verbindung E in einer Menge von 1,0 bis 15,0 Gew.-Teile eingesetzt wird, wobei sich alle Gewichtsteilangaben der Verbindung E auf die Summe der Gewichtsteile der Komponenten A1 + A2 = 100 Gewichtsteile beziehen.

**5.** Verfahren gemäß einem der vorstehenden Ansprüche, **dadurch gekennzeichnet, dass** als Komponente B

B1 Katalysatoren wie

a) aliphatische tertiäre Amine, cycloaliphatische tertiäre Amine, aliphatische Aminoether, cycloaliphatische Aminoether, aliphatische Amidine, cycloaliphatische Amidine, Harnstoff und Derivate des Harnstoffs und/oder
b) Zinn(II)-Salze von Carbonsäuren, und

B2 gegebenenfalls Hilfs- und Zusatzstoffe eingesetzt werden.

**6.** Verfahren gemäß einem der vorstehenden Ansprüche, **dadurch gekennzeichnet, dass** Komponente A umfasst:

A1 65 bis 75 Gew.-Teile eines oder mehrerer Polyethercarbonatpolyole mit einer Hydroxylzahl gemäß DIN 53240-1:2013-06 von 20 mg KOH/g bis 120 mg KOH/g, und
A2 35 bis 25 Gew.-Teile eines oder mehrerer Polyetherpolyole mit einer Hydroxylzahl gemäß DIN 53240 von 20 mg KOH/g bis 250 mg KOH/g und einem Gehalt an Ethylenoxid von 0,1 bis 59 Gew.-%, wobei die Polyetherpolyole A2 frei von Carbonateinheiten sind.

**7.** Verfahren gemäß einem der vorstehenden Ansprüche, **dadurch gekennzeichnet, dass** Komponente A1 ein Polyethercarbonatpolyol umfasst, welches erhältlich ist durch Copolymerisation von Kohlendioxid, einem oder mehreren Alkylenoxiden, in Gegenwart eines oder mehrerer H- funktioneller Startermoleküle.

**8.** Verfahren gemäß einem der vorstehenden Ansprüche, **dadurch gekennzeichnet, dass** Komponente D mindestens 50 Gew.-% 2,4-Toluylendiisocyanat und 2,6-Toluylendiisocyanat umfasst.

**9.** Verfahren gemäß einem der vorstehenden Ansprüche, **dadurch gekennzeichnet, dass** in der Komponente D höchstens 21,5 Gew.-% an 2,6-Toluylendiisocyanat enthalten sind, basierend auf dem Gesamtgewicht der Komponente D.

**10.** Verfahren gemäß Anspruch 9, **dadurch gekennzeichnet, dass** 2,4-Toluylendiisocyanat und 2,6-Toluylendiisocyanat als eine Mischung mindestens einer Charge, bevorzugt zwei voneinander verschiedenen Chargen, eingesetzt werden wobei die erste Charge 2,4-Toluylendiisocyanat zu 2,6-Toluylendiisocyanat im Verhältnis von 80 Gew.-% zu 20 Gew.-% enthält und die zweite Charge 2,4-Toluylendiisocyanat zu 2,6-Toluylendiisocyanat im Verhältnis von 67 Gew.-% zu 33 Gew.-% enthält, wobei der Anteil an der zweiten Charge höchstens 25 Gew.-%, bezogen auf das Gesamtgewicht der ersten und der zweiten Charge beträgt.

**11.** Polyurethanschaumstoffe, erhältlich durch ein Verfahren gemäß einem der Ansprüche 1 bis 10.

**12.** Polyurethanschaumstoffe gemäß Anspruch 11, **dadurch gekennzeichnet, dass** es sich um Polyurethan- Weichschaumstoffe handelt, insbesondere um offenzellige PolyurethanWeichschaumstoffe.

**13.** Polyurethanschaumstoffe gemäß Anspruch 11 oder 12, **dadurch gekennzeichnet, dass** die Polyurethanschaumstoffe ein Raumgewicht gemäß DIN EN ISO 3386-1:2015-10 von 45,5 bis 60,0 kg/$m^3$ aufweisen.

**14.** Verwendung der Polyurethanschaumstoffe gemäß einem der Ansprüche 11 bis 13 zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

**15.** Zweikomponentensystem zur Herstellung von Polyurethanschaumstoffen enthaltend eine erste Komponente K1 umfassend oder bestehend aus:

Komponente A) enthaltend Polyethercarbonatpolyol (Komponente A1) sowie gegebenenfalls eines oder mehrerer Polyetherpolyole (Komponente A2), wobei die Polyetherpolyole A2 frei von Carbonateinheiten sind,
B) gegebenenfalls

B1) Katalysatoren, und/oder
B2) Hilfs- und Zusatzstoffen

C) Wasser und/oder physikalischen Treibmitteln, und
E) eine Verbindung, die folgende Formel (I) aufweist:

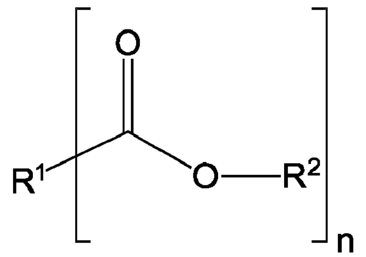

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2 Kohlenstoffatomen ist;
$R^2$ ein linearer, verzweigter, substituierter oder unsubstituierter aliphatischer Kohlenwasserstoffrest ist; und

n gleich 1 bis 3 ist

und eine zweite Komponente K2 umfassend oder bestehend aus:

D) Di- und/oder Polyisocyanaten, welche 2,4-Toluylendiisocyanat und 2,6-Toluylendiisocyanat enthalten oder daraus bestehen,
und wenigstens eines Katalysators, wobei die Komponente K1 und die Komponente K2 in einem Verhältnis einer Isocyanat-Kennzahl von 90 bis 125 zueinander vorliegen.

Europäisches Patentamt
European Patent Office
Office européen des brevets

# EUROPÄISCHER RECHERCHENBERICHT

Nummer der Anmeldung
EP 18 16 3430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2017/097729 A1 (COVESTRO DEUTSCHLAND AG [DE]) 15. Juni 2017 (2017-06-15)<br>* Seite 1, Zeile 3 - Seite 4, Zeile 30 *<br>* Seite 21, Zeile 27 - Seite 22, Zeile 8 *<br>* Beispiel 4; Tabelle 1 *<br>* Ansprüche 1,9 *<br>----- | 1-15 | INV.<br>C08G18/48<br>C08G18/76<br>C08G18/16<br>C08G18/18<br>C08G18/20<br>C08G18/24<br>C08G18/40<br>C08G18/44<br><br>ADD.<br>C08G101/00 |
| A | US 5 624 968 A (GABBARD JAMES D [US]) 29. April 1997 (1997-04-29)<br>* Spalte 1, Zeile 16 - Spalte 6, Zeile 18; Tabellen 1,2 *<br>* Anspruch 1 *<br>----- | 1-15 | |
| A | DATABASE WPI<br>Week 201747<br>Thomson Scientific, London, GB;<br>AN 2017-36144U<br>XP002781476,<br>& CN 106 700 010 A (CHANGXING TIANSHENG ENERGY TECHNOLOGY CO LTD)<br>24. Mai 2017 (2017-05-24)<br>* Zusammenfassung *<br>----- | 1-15 | |

RECHERCHIERTE SACHGEBIETE (IPC)
C08G
C08L

Der vorliegende Recherchenbericht wurde für alle Patentansprüche erstellt

1

| Recherchenort | Abschlußdatum der Recherche | Prüfer |
|---|---|---|
| München | 31. August 2018 | Neugebauer, Ute |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 16 3430

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-08-2018

| Im Recherchenbericht angeführtes Patentdokument | Datum der Veröffentlichung | Mitglied(er) der Patentfamilie | Datum der Veröffentlichung |
|---|---|---|---|
| WO 2017097729 A1 | 15-06-2017 | SG 11201804635P A | 30-07-2018 |
| | | WO 2017097729 A1 | 15-06-2017 |
| US 5624968 A | 29-04-1997 | US 5457139 A | 10-10-1995 |
| | | US 5624968 A | 29-04-1997 |
| CN 106700010 A | 24-05-2017 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2017097729 A1
- EP 0222453 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- US 4089835 A
- US 4260530 A
- GB 2072204 A
- DE 3103757 A1
- US 4374209 A
- EP 0176013 A
- EP 0000389 A
- EP 0007502 A
- EP 355000 A

### In der Beschreibung aufgeführte Nicht-Patentliteratur

- **G. OERTEL.** Kunststoff-Handbuch. Hanser-Verlag, 1993, vol. VII, 104-127
- **VIEWEG ; HÖCHTLEN.** Kunststoff-Handbuch. Carl-Hanser-Verlag, 1993, vol. VII, 139-265